# EUROPEAN PATENT SPECIFICATION

(11) **EP 3 267 550 B1**
(45) Date of publication and mention of the grant of the patent: **10.04.2024**
(21) Application number: 16177779.2
(22) Date of filing: 04.07.2016
(51) Int. Cl.: H02J 7/00, H02J 7/02, H02J 7/34, H02J 50/10, H02J 50/90, H04M 1/04, H01R 13/66, H01R 31/06

(54) **WIRELESS CHARGER MODULE FOR A VEHICLE**
DRAHTLOSES LADEGERÄTMODUL FÜR EIN FAHRZEUG
MODULE DE CHARGEUR SANS FIL DESTINÉ À UN VÉHICULE

(43) Date of publication of application: 10.01.2018
(73) Proprietor: Volvo Car Corporation, 40 531 Göteborg (SE)
(72) Inventor: Andreasson, Björn, 42656 Västra Frölunda (SE)
(74) Representative: Valea AB

(56) References cited:
- CN-U- 202 978 382
- CN-U- 204 316 164
- CN-Y- 2 765 366
- US-A1- 2006 278 788
- US-A1- 2013 257 147
- US-A1- 2013 260 610

## Description

### Field of the Invention

The present invention relates to a wireless charger module for a vehicle and to a console for docking such a charger module.

### Background of the invention

With the increasingly common use of battery powered electronic devices comes an increased need to provide efficient and convenient charging solutions.

In particular, it is desirable to be able to conveniently charge an electronic device when traveling in a vehicle. For this purpose, wired charging solutions utilizing the cigarette lighter outlet in a vehicle have long been known. Moreover, with the introduction and increasing popularity of wireless charging solutions, a range of different wireless charging alternative have been presented.

For example, it is know to provide a wireless charging module in a vehicle comprising a charging surface suitable for an electronic device such as a smartphone.

US 2013/257147 A1 discloses an example of portable wireless charging module for charging wirelessly an electronic device within a passenger compartment of a vehicle.

However, smartphones and similar devices are made in many different sizes, which for example may lead to that the phone moves around on the charging surface or that the device does not fit due to it being too large.

Accordingly, it is desirable to provide an improved wireless charger module for a vehicle to enable convenient wireless charging of different types of devices.

### Summary

In view of above-mentioned and other drawbacks of the prior art, it is an object of the present invention to provide an improved wireless charger module for use in a vehicle, and in particular to provide a charger module which advantageously may be located in a tunnel console of a vehicle.

According a first aspect of the invention, there is provided a portable wireless charging module for a vehicle comprising: a housing comprising a wireless charger unit and a charging surface for placing a device to be charged; an electrical connection plug fixedly connected to the housing on a side of the housing opposite the charging surface; wherein the plug is extending in a direction away from the charging surface; and wherein the charging module is configured such that the charging surface is horizontally aligned when in use.

The present invention is based on the realization that there is a need for a wireless charging module for a vehicle which is capable of charging a portable electronic device by means of inductive charging, i.e. wireless charging. By providing a charging module which comprises a horizontally aligned charging surface when in use, the charging module can be used to charge a wide range of electronic devices by placing the device on the charging surface. The charging module can be considered to be in use when connected to a corresponding receiving electrical connection socket such that the charger unit can be activated.

An additional advantage of the charging module is that the fixedly connected, i.e. integrated, plug eliminates the need for cables and also provides mechanical support for the housing and the charging plate.

According to one embodiment of the invention, the plug may be configured to be inserted in a substantially vertically aligned receiving electrical connection socket. Such a vertically aligned socket may for example be located in a tunnel console of a vehicle. The plug is thus arranged substantially perpendicularly to the horizontally aligned charging surface. However, it is also possible that the socket, and consequently the plug, is arranged at an angle in relation to a vertical plane.

According to one embodiment of the invention the plug may be a cigarette lighter type plug. Since cigarette lighter type sockets are commonly available in vehicle, the charging module can be used in many different types of vehicles. However, the plug may also be of another type, such as USB and the like.

According to one embodiment of the invention the plug may be protruding in a direction substantially perpendicular to a bottom surface of the housing portion. In particular, the bottom surface of the housing may be approximately parallel to the charging surface. A plug extending perpendicularly to the bottom surface of the housing is thus suitable for connecting to a vertically aligned socket.

According to one embodiment of the invention the wireless charger may comprise the charging surface, and wherein the wireless charger is provided in the form of a charging plate releasably connected to the housing. By providing a releasable charging plate, the charging module can be made modular such that charging plates of different configurations can be used together with one and the same housing, making the charging modular to increase its possible applications.

According to one embodiment of the invention the charging module may further comprise a high friction material arranged on the charging surface. The purpose of the high friction material is to prevent the device from moving around on the charging surface during use of the vehicle. A high friction material should be interpreted to include material having a friction which is sufficiently high to prevent movement of an electronic device during normal operation of the vehicle.

According to one embodiment of the invention, the high friction material may be a rubber material, such as EPDM (ethylene propylene diene monomer) rubber or similar materials.

The charging module comprises a holding element configured to hold an electronic device in place on the charging surface. The holding element may thus hold the electronic device in place also in case of more abrupt or powerful movement of the vehicle, which is important to improve the safety in a vehicle. In particular, the holding element reduces the risk of loose objects causing damage to occupants of the vehicle in case of an accident.

The holding element is a flexible element having a first portion protruding from the charging surface and a second portion, protruding from the first portion in parallel with and located at a distance from the charging surface to clamp an electronic device to the charging surface. The holding element can thus be described as an elongate L-shaped protruding from the charging module, where the electronic device can be inserted under the holding element to be kept in place. The holding element is flexible, or spring loaded, such that a downward force acts on an electronic device arranged on the charging surface, thereby clamping the device to the charging surface. The holding element is provided with or made from a high friction material to further improve its ability to keep the electronic device in place.

According to one embodiment of the invention, a size of the charging surface may be configured to correspond to a size of a predetermined electronic device, thereby providing the possibility to tailor the charging module to a specific device.

According to one embodiment of the invention the housing may comprise a body, and the plug may be integrated in the body. Moreover, the body may comprise the control electronics for the wireless charger unit, and the size of the housing can thus be adapted based on the size of the control electronics.

There is also provided a console for a vehicle comprising: a portable charging module according to any one of the above described embodiments, wherein the console comprises a recess and a cigarette lighter type socket located in the recess, and wherein the plug of the portable charging module is releasably connected to the socket.

According to one embodiment of the invention the charging surface may be recessed in relation to an outer surface of the console, such that a compartment is formed where the electronic device can be placed. The side walls of the compartment will then prevent movement of the electronic device. The charging surface may also be aligned with the outer surface of the console. Thereby, the charging module can be made to blend into the overall appearance of the vehicle interior.

In one embodiment of the invention, the recess in the console may be cup holder.

According to one embodiment of the invention, the console may be a tunnel console configured to be located adjacent to a driver seat of a vehicle.

Further features of, and advantages with, the present invention will become apparent when studying the appended claims and the following description. The skilled person realize that different features of the present invention may be combined to create embodiments other than those described in the following, without departing from the scope of the appended claims.

### Brief Description of the Drawings

These and other aspects of the present invention will now be described in more detail, with reference to the appended drawings showing an example embodiment of the invention, wherein:
Figs. 1A-B schematically illustrate a charging module according to an embodiment not covered by the appended claims;
Fig. 2 schematically illustrates a charging module according to an embodiment not covered by the appended claims;
Fig. 3 schematically illustrates a charging module according to an embodiment of the invention; and
Fig. 4 schematically illustrates a charging module according to an embodiment of the invention arranged in a vehicle; and
Fig. 5 schematically illustrates a charging module according to an embodiment of the invention arranged in a vehicle.

### Detailed Description of Example Embodiments

In the present detailed description, various embodiments of the charging module according to the present invention are mainly described with reference to a charging module configured to be connected to a plug in a horizontally aligned console of a vehicle, such as a tunnel console located between the front seats of the vehicle. However, it should be noted that various embodiments of the invention are equally applicable for charging modules configure for use in other locations of a vehicle.

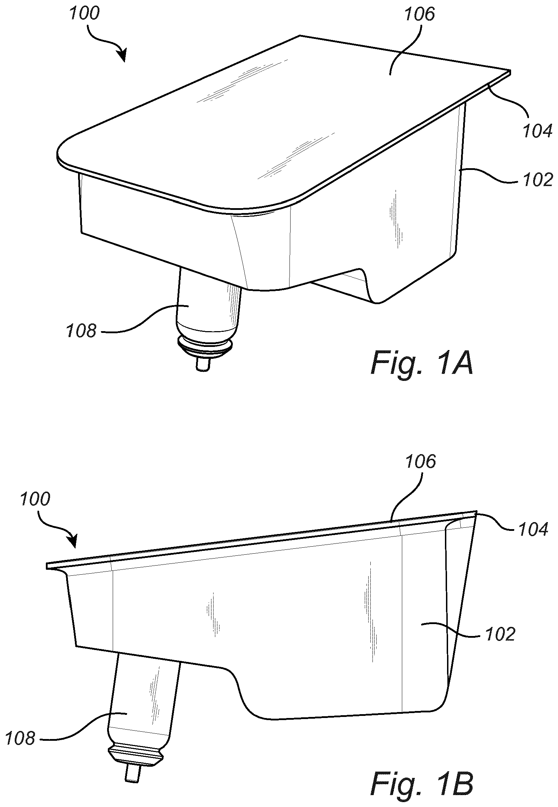

Figs. 1A-B schematically illustrate a charging module which comprises a housing 102 which in turn comprises a wireless charger unit 104 and a charging surface 106 for placing a device to be charged. The device to be charged may for example be a smartphone, a tablet computer and the like, or any other electronic device having wireless charging functionality. The charger unit 104 may also be fully or partially integrated with and located in the housing 102.

The charging module 100 further comprises an electrical connection plug 108 fixedly connected to the housing 102 on a side of the housing opposite the charging surface 106. The plug 108 is here extending in a direction away from the charging surface 106. The charging module 100 is thus configured such that the charging surface 106 is horizontally aligned when in use. It is desirable with a horizontally aligned charging surface for preventing that the electronic device slides off the charging module.

Even though the plug 108 is here illustrated as a conventional cigarette lighter type 12V plug, other types of electrical connectors may also be used, such as a USB plug.

In Figs. 1A-B, it can be seen that the housing 102 has a certain shape and size which can be selected based on the size of the control electronics required for controlling the charger unit 104 for embodiments where the control electronics is at least partially located in the housing. Alternatively, such control electronics can be integrated in the charger unit 104, in which case the housing 102 can be made smaller. The charger unit 104 may also be releasably connected to the charging module 100. Thereby, the charger unit 104 can be easily replaced which may be advantageous if the charger unit 104 breaks or if different electronic devices requires different charging technologies.

Moreover, the shape of the housing 102 can be adapted to fit into a receiving recess to provide additional mechanical stability to the charging module 100.

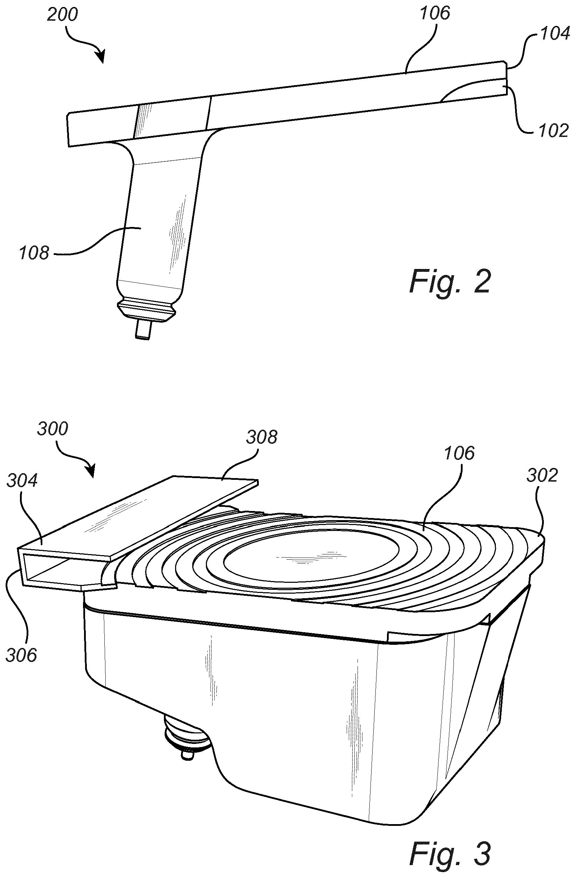

Fig. 2 schematically illustrates a charging module 200 where the size of the housing 102 is minimized. The housing 102 and the charging unit 104 can be seen as one integrated unit. Thereby, a slim charging module 200 is provided which weighs less and which may be stored more easily when not in use.

Fig. 3 schematically illustrates a charging module 300 comprising a high friction material 302 arranged on the charging surface. The high friction material 302 may be arranged as a layer or film on the charger unit to form the charging surface 106.

A high friction material is herein considered to be a material having a higher coefficient of static friction to a flat smooth material such as the glass or plastic typically forming the backside of an electronic device, than what a similar flat hard material would have. The high friction material may be a rubber material such as EPDM or any other rubber-like material known by the skilled person.

The surface of the high friction material may also be structured to further prevent movement of an electronic device placed on the charging surface. The structures on the charging surface may for example be ribs, ridges or other protruding elements.

Fig. 3 further illustrates that the charging module comprises a holding element 304 configured to hold an electronic device in place on the charging surface 106. The holding element 304 is here illustrated as a flexible element having a first portion 306 protruding in a direction from the charging surface 106 and a second portion 308, protruding from the first portion in parallel with the charging surface 106 and located at a distance from the charging surface 106 for clamping an electronic device to the charging surface 106.

Even though the holding element is illustrated as being located at a short edge of the charging module, the holding element may equally well be arranged along one or more of the edges of the charger module. The flexibility of the holding element 304 acts to provide a downwards force on an electronic device placed between the charging surface 106 and the holding element 304. The flexibility of the holding element 304 also makes it possible to use the charging module 100 comprising the holding element 304 together with electronic devices of different thickness.

To further improve the ability to maintain the electronic device in the desired position on the charging surface 106, the holding element may be provided with a high friction material of the lower side of the second portion 108, which is in contact with the electronic device when an electronic device is clamped by the holding element.

The skilled person readily realizes that a wide range of different mechanical configurations are possible to achieve the desired functionality of a holding element.

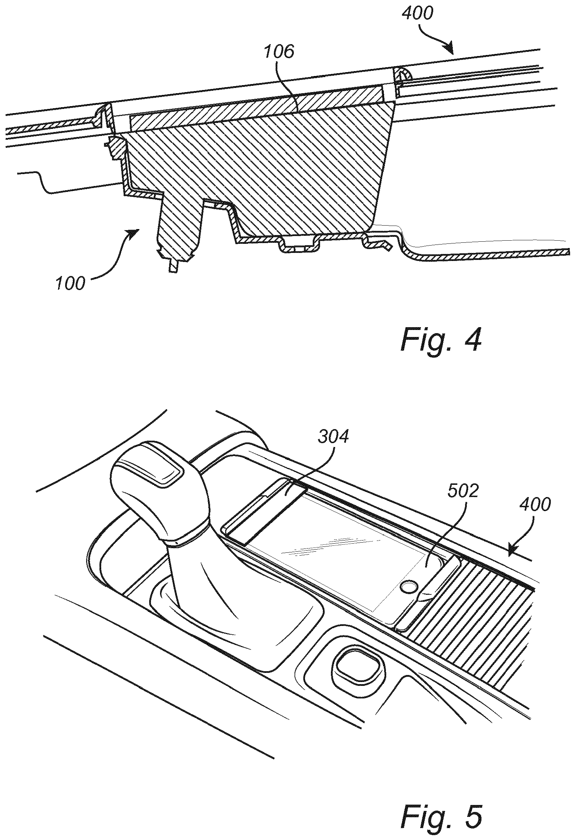

Fig. 4 schematically illustrates a cross section of a part of a tunnel console 400 for a vehicle where a portable charging module 100 is arranged in a recess of the console. Here, it can be seen that the charging surface 106 is recessed in relation to the outer surface of the console 400 which further acts to maintain an electronic device in place on the charging surface 106 due to the side walls formed by the console.

Fig. 5 is a schematic top view of a tunnel console 400 in which a charging module 100 is placed, and where an electronic device in the form of a smartphone 502 is placed on the charging surface 106 and held in place by means of the holding element. The recess in which the charging module is placed may for example be a cup holder. The illustrated tunnel console is located adjacent to the driver seat of the vehicle and is thus easy to reach for a driver or front seat passenger. However, the described charging module may be arranged in many different ways.

Even though the invention has been described with reference to specific exemplifying embodiments thereof, many different alterations, modifications and changes are possible within a technical scope of the present invention, which is solely defined by the appended claims.

Also, it should be noted that parts of the charging module may be omitted, interchanged or arranged in various ways, the charging module yet being able to perform the functionality of the present invention.

Additionally, variations to the disclosed embodiments can be understood and effected by the skilled person in practicing the claimed invention, from a study of the drawings, the disclosure, without departing from the scope of the appended claims.

## Claims

1. A portable wireless charging module (100, 200, 300) for a vehicle comprising:
a housing (102) comprising a wireless charger unit (104) and a charging surface (106) for placing a device to be charged;
an electrical connection plug (108) fixedly connected to the housing on a side of the housing opposite the charging surface;
wherein the plug is extending in a direction away from the charging surface; and
wherein the charging module is configured such that the charging surface is horizontally aligned when in use, the charging module further comprising a holding element (304) configured to hold an electronic device in place on the charging surface, wherein the holding element is a flexible element having a first portion (306) protruding in a direction from the charging surface and a second portion (308), protruding from the first portion in parallel with and located at a distance from the charging surface for clamping an electronic device to the charging surface,
wherein the charging module is **characterized in that** the flexibility of the holding element (304) acts to provide a downwards force on the device when placed between the charging surface (106) and the holding element (304), thereby clamping the device to the charging surface, and
**in that** the holding element (304) is provided with a high friction material of a lower side of the second portion (308) which is in contact with the device when the device is clamped by the holding element (304).

2. The charging module according to claim 1, where the plug is configured to be inserted in a substantially vertically aligned receiving electrical connection socket

3. The charging module according to claim 1 or 2, wherein the plug is a cigarette lighter type plug.

4. The charging module according to any one of the preceding claims, wherein the plug is protruding in a direction substantially perpendicular to a bottom surface of the housing portion.

5. The charging module according to any one of the preceding claims, wherein the wireless charger comprises the charging surface, and wherein the wireless charger is provided in the form of a charging plate releasably connected to the housing.

6. The charging module according to any one of the preceding claims, further comprising a high friction material (302) arranged on the charging surface.

7. The charging module according to claim 6, wherein the high friction material is a rubber material.

8. The charging module according to any one of the preceding claims, wherein a size of the charging surface is configured to correspond to a size of a predetermined electronic device.

9. The charging module according to any one of the preceding claims, wherein the housing comprises a body, and wherein the plug is integrated in the body.

10. A console (400) for a vehicle comprising:
a portable charging module (100) according to any one of the preceding claims, wherein the console comprises a recess and a cigarette lighter type socket located in the recess, and wherein the plug of the portable charging module is releasably connected to the socket.

11. The console according to claim 10, wherein the charging surface is recessed in relation to an outer surface of the console.

12. The console according to claim 10 or 11, wherein the recess in the console is a cup holder.

13. The console according to any one of claims 10 to 12, wherein the console is a tunnel console configured to be located adjacent to a driver seat of a vehicle.

## Patentansprüche

1. Tragbares drahtloses Lademodul (100, 200, 300) für ein Fahrzeug, umfassend:
ein Gehäuse (102), das eine drahtlose Ladegeräteinheit (104) und eine Ladefläche (106), auf der eine Vorrichtung zum Laden platziert werden kann, umfasst;
ein Stecker für eine elektrische Verbindung (108), der fest mit dem Gehäuse an einer Seite des Gehäuses, die der Ladefläche gegenüberliegt, verbunden ist;
wobei der Stecker sich in einer Richtung weg von der Ladefläche erstreckt; und
wobei das Lademodul so konfiguriert ist, dass die Ladefläche bei der Verwendung horizontal ausgerichtet ist, wobei das Lademodul ferner ein Halteelement (304), das dazu konfiguriert ist, eine elektronische Vorrichtung auf der Ladefläche in Position zu halten, umfasst, wobei das Halteelement ein flexibles Element ist, das einen ersten Abschnitt (306), der in einer Richtung weg von der Ladefläche vorsteht, und einen zweiten Abschnitt (308), der von dem ersten Abschnitt parallel zu der Ladefläche vorsteht und sich in einem Abstand von dieser befindet, aufweist, um eine elektrische Vorrichtung an der Ladefläche festzuklemmen,
wobei das Lademodul **dadurch gekennzeichnet ist, dass** die Flexibilität des Halteelements (304) dazu dient wird, eine nach unten gerichtete Kraft auf die Vorrichtung bereitzustellen, wenn sie zwischen der Ladefläche (106) und dem Halteelement (304) platziert wird, wodurch die Vorrichtung an die Ladefläche geklemmt wird, und dadurch, dass das Halteelement (304) mit einem Material mit hohem Reibungskoeffizienten einer unteren Seite des zweiten Abschnitts (308) bereitgestellt ist, die in Kontakt mit der Vorrichtung steht, wenn die Vorrichtung durch das Halteelement (304) festgeklemmt wird.

2. Lademodul nach Anspruch 1, wobei der Stecker dazu konfiguriert ist, in eine im Wesentlichen vertikal ausgerichtete, aufnehmende Steckdose für eine elektrische Verbindung eingesteckt zu werden.

3. Lademodul nach Anspruch 1 oder 2, wobei der Stecker ein Stecker der Art für Zigarettenanzünder ist.

4. Lademodul nach einem der vorhergehenden Ansprüche, wobei der Stecker in einer Richtung, die im Wesentlichen senkrecht zu einer unteren Fläche des Gehäuseabschnitts ist, vorsteht.

5. Lademodul nach einem der vorhergehenden Ansprüche, wobei das drahtlose Ladegerät die Ladefläche umfasst und wobei das drahtlose Ladegerät in Form einer Ladeplatte, die lösbar mit dem Gehäuse verbunden ist, bereitgestellt ist.

6. Lademodul nach einem der vorhergehenden Ansprüche, ferner umfassend ein Material mit hohem Reibungskoeffizienten (302), das auf der Ladefläche angeordnet ist.

7. Lademodul nach Anspruch 6, wobei das Material mit hohem Reibungskoeffizienten ein Gummimaterial ist.

8. Lademodul nach einem der vorhergehenden Ansprüche, wobei eine Größe der Ladefläche dazu konfiguriert ist, einer Größe einer vorbestimmten elektronischen Vorrichtung zu entsprechen.

9. Lademodul nach einem der vorhergehenden Ansprüche, wobei das Gehäuse einen Körper umfasst und wobei der Stecker in den Körper integriert ist.

10. Konsole (400) für ein Fahrzeug, umfassend:
ein tragbares Lademodul (100) nach einem der vorhergehenden Ansprüche, wobei die Konsole eine Aussparung und eine Steckdose der Art für Zigarettenanzünder, die sich in der Aussparung befindet, umfasst und wobei der Stecker des tragbaren Lademoduls lösbar mit der Steckdose verbunden ist.

11. Konsole nach Anspruch 10, wobei die Ladefläche in Bezug auf eine äußere Fläche der Konsole ausgespart ist.

12. Konsole nach Anspruch 10 oder 11, wobei die Aussparung in der Konsole eine Becherhalterung ist.

13. Konsole nach einem der Ansprüche 10 bis 12, wobei die Konsole eine Tunnelkonsole ist, die dazu konfiguriert ist, sich neben einem Fahrersitz eines Fahrzeugs zu befinden.

## Revendications

1. Module de chargement sans fil portable (100, 200, 300) destiné à un véhicule comprenant :
un boîtier (102) comprenant une unité de chargeur sans fil (104) et une surface de chargement (106) pour placer un dispositif à charger ;
une fiche de connexion électrique (108) connectée de manière fixe au boîtier sur un côté du boîtier opposé à la surface de charge ;
dans lequel la fiche s'étend dans une direction opposée à la surface de chargement ; et
dans lequel le module de chargement est configuré de sorte que la surface de chargement est alignée horizontalement lors de son utilisation, le module de chargement comprenant en outre un élément de maintien (304) configuré pour maintenir un dispositif électronique en place sur la surface de chargement, dans lequel l'élément de maintien est un élément flexible ayant une première partie (306) faisant saillie dans une direction à partir de la surface de chargement et une seconde partie (308), faisant saillie à partir de la première partie parallèlement et située à distance de la surface de chargement pour serrer un dispositif électronique sur la surface de chargement,
dans lequel le module de chargement est **caractérisé en ce que** la flexibilité de l'élément de maintien (304) agit pour fournir une force vers le bas sur le dispositif lorsqu'il est placé entre la surface de chargement (106) et l'élément de maintien (304), serrant ainsi le dispositif sur la surface de chargement, et **en ce que** l'élément de maintien (304) est pourvu d'un matériau à friction élevée sur un côté inférieur de la seconde partie (308) qui est en contact avec le dispositif lorsque le dispositif est serré par l'élément de maintien (304).

2. Module de chargement selon la revendication 1, où la fiche est configurée pour être insérée dans une prise de connexion électrique de réception alignée sensiblement verticalement.

3. Module de chargement selon la revendication 1 ou 2, dans lequel la fiche est une fiche du type allume-cigare.

4. Module de chargement selon l'une quelconque des revendications précédentes, dans lequel la fiche fait saillie dans une direction sensiblement perpendiculaire à une surface inférieure de la partie de boîtier.

5. Module de chargement selon l'une quelconque des revendications précédentes, dans lequel le chargeur sans fil comprend la surface de chargement, et dans lequel le chargeur sans fil est prévu sous la forme d'une plaque de chargement connectée de manière amovible au boîtier.

6. Module de chargement selon l'une quelconque des revendications précédentes, comprenant en outre un matériau à friction élevée (302) agencé sur la surface de chargement.

7. Module de chargement selon la revendication 6, dans lequel le matériau à friction élevée est un matériau en caoutchouc.

8. Module de chargement selon l'une quelconque des revendications précédentes, dans lequel une taille de la surface de chargement est configurée pour correspondre à une taille d'un dispositif électronique prédéterminé.

9. Module de chargement selon l'une quelconque des revendications précédentes, dans lequel le boîtier comprend un corps, et dans lequel la fiche est intégrée dans le corps.

10. Console (400) destinée à un véhicule comprenant :
un module de chargement portable (100) selon l'une quelconque des revendications précédentes, dans laquelle la console comprend un évidement et une prise de type allume-cigare située dans l'évidement, et dans laquelle la fiche du module de chargement portable est connectée de manière amovible à la prise.

11. Console selon la revendication 10, dans laquelle la surface de chargement est évidée par rapport à une surface externe de la console.

12. Console selon la revendication 10 ou 11, dans laquelle l'évidement dans la console est un porte-gobelet.

13. Console selon l'une quelconque des revendications 10 à 12, dans laquelle la console est une console tunnel configurée pour être située adjacente à un siège conducteur d'un véhicule.
